Europäisches Patentamt

(19) European Patent Office

Office européen des brevets

(11) Veröffentlichungsnummer: **0 037 489**

**A1**

(12) # EUROPÄISCHE PATENTANMELDUNG

(21) Anmeldenummer: 81102050.2

(22) Anmeldetag: 19.03.81

(51) Int. Cl.³: **G 05 B 19/35**

(30) Priorität: 03.04.80 DE 3013094

(43) Veröffentlichungstag der Anmeldung:
14.10.81 Patentblatt 81/41

(84) Benannte Vertragsstaaten:
AT CH FR GB IT LI NL SE

(71) Anmelder: Dr. Johannes Heidenhain GmbH
Nansenstrasse 17
D-8225 Traunreut(DE)

(72) Erfinder: Schwefel, Ernst, Dipl.-Phys.
Reichenbergweg 2
D-8225 Traunreut(DE)

(54) Verfahren zur automatischen Offsetspannungskompensation bei numerisch gesteuerten Maschinen.

(57) Bei numerischen Steuerungen mit geschlossenem Lageregelkreis ergibt sich das Problem, daß die tatsächlich angefahrene Position eines Werkzeugs (Ist-Wert) sich von der programmierten Position (Sollwert) infolge der Offsetspannungen der Analogausgänge (14, 17) der numerischen Steuerung (13) und des Motorreglers (21) unterscheidet. Zur Vermeidung derartiger Ablagen wird am Analogausgang (14) der numerischen Steuerung (13) eine Spannung ausgegeben, die eine Funktion der Differenz zwischen Sollwert und Istwert und wenigstens einer gespeicherten Offsetstrecke ist. Die vom Lageregelkreis erzeugten Offsetstrecken werden über bestimmte Zeiträume vorab von der numerischen Steuerung (13) automatisch gemittelt und die resultierenden Mittelwerte in einem Speicher der numerischen Steuerung (13) vorzeichenrichtig akkumuliert.

FIG. 2

EP 0 037 489 A1

DR. JOHANNES HEIDENHAIN GMBH          11. März 1981

### Verfahren zur automatischen Offsetspannungs- kompensation bei numerisch gesteuerten Maschinen
================================================

Die Erfindung betrifft ein Verfahren zur automatischen Offsetspannungskompensation gemäß dem Oberbegriff des Anspruchs 1.

Eine numerische Steuervorrichtung mit einer Offsetspannungskompensation ist aus der DE-AS 26 26 784 bereits bekannt.

Bei Steuerungen mit geschlossenem Lageregelkreis ergibt sich das Problem, daß die tatsächlich angefahrene Position eines Werkzeugs oder Werkstücks sich von der programmierten Position um eine Anzahl von Weginkrementen unterscheidet, die sich aus der Summe der Offsetspannungen des Analogausganges der Steuerung und des Motorreglers, dividiert durch die Spannung errechnet, die von der Steuerung pro Weginkrement ausgegeben wird. Dieser Umstand ist bei üblichen Steuerungen unproblematisch, weil sich die Offsetspannungen sehr langsam ändern, also zumindest über die Bearbeitungsdauer eines Werkstücks konstant bleiben und somit nur einen konstanten Versatz aller bearbeiteten Flächen bewirken. Die Vermessung des Werkstücks ergibt somit exakte Distanzen zwischen beliebigen
bearbeiteten Flächen.

Bei Steuerungen mit echter Lage-Istwertanzeige
ist der Einfluß der Offsetspannungen aber sehr
störend, da die Lage-Istwertanzeige an jeder eingefahrenen Position eine Ablage vom programmierten Lage-Sollwert zeigt. Ein weiterer Nachteil
ergibt sich bei Ablagen dieser Art dann, wenn dadurch der automatische Steuerungsablauf nicht
fortgesetzt wird.

Der Erfindung liegt die Aufgabe zugrunde, bei
einer numerischen Steuerung der oben erwähnten
Gattung ein Verfahren zur automatischen Offsetspannungskompensation anzugeben, um derartige Ablagen mit ihren nachteiligen Folgen auszuschließen.

Diese Aufgabe wird erfindungsgemäß durch die kennzeichnenden Merkmale der Ansprüche 1 und 2 gelöst.

Die mit der Erfindung erzielten Vorteile bestehen
insbesondere darin, daß bei numerischen Steuerungen
bei jeder angefahrenen Position die Lage-Istwertanzeige mit dem programmierten Lage-Sollwert übereinstimmt, so daß der Steuerungsablauf nicht beeinträchtigt wird.

Weitere vorteilhafte Einzelheiten des Verfahrens
entnimmt man den Unteransprüchen.

Im folgenden wird das vorgeschlagene Verfahren anhand der Zeichnung näher erläutert.

Es zeigen

Figur 1 eine schematische Darstellung einer numerisch gesteuerten Drehmaschine und

Figur 2 ein Blockschaltbild eines Lageregelkreises.

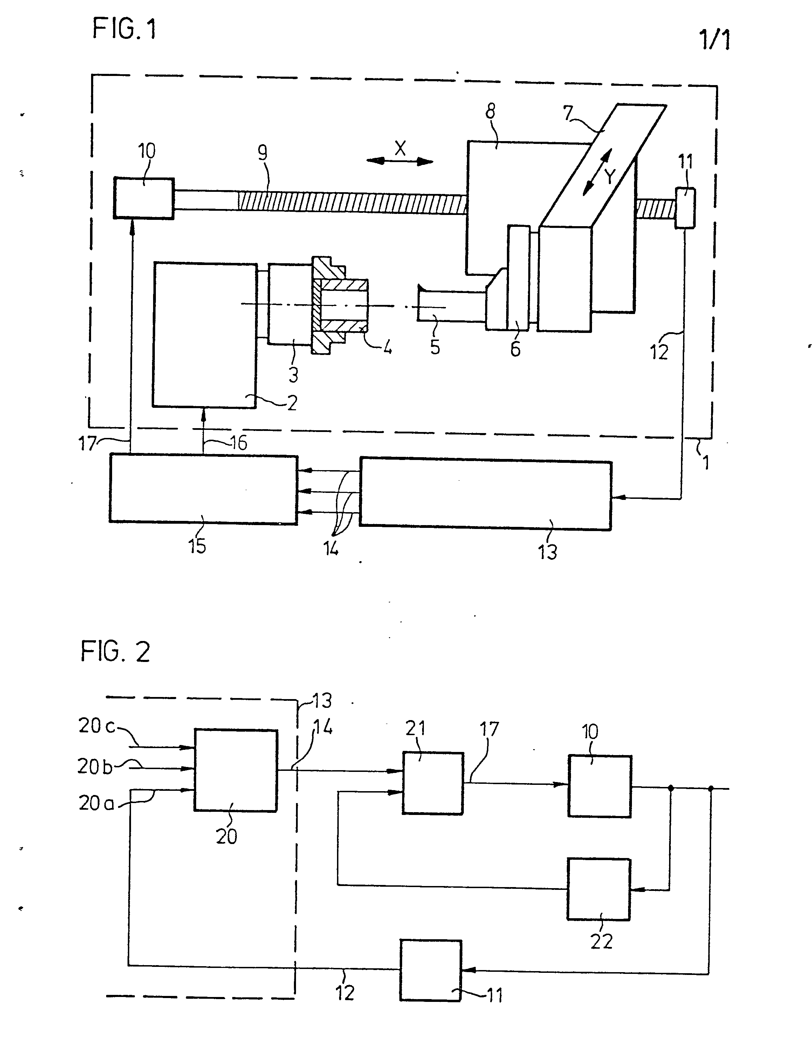

In Figur 1 ist in vereinfachter schematischer Darstellung eine numerisch gesteuerte Drehmaschine 1 gezeigt, die einen Spindelkasten 2 zum Antrieb eines drehbaren Futters 3 mit einem eingespannten, zu bearbeitenden Werkstück 4 aufweist. Ein Bearbeitungswerkzeug 5 ist mittels eines Werkzeughalters 6 über einen Querschlitten 7 für die Y-Richtung mit einem Längsschlitten 8 für die X-Richtung verbunden. Zur Positionierung des Werkzeugs 5 in der X-Richtung (die hier nur betrachtet werden soll), ist der Längsschlitten 8 in dieser Richtung mittels einer Spindel 9 verschiebbar, die von einem Vorschubmotor 10 angetrieben wird.

Die Lage-Istwerte der Schneidkante des Werkzeugs 5 bei der Verschiebung des Längsschlittens 8 werden von einem an der Spindel 9 befestigten Positionsmeßgerät 11 ermittelt und über eine Leitung 12 einer numerischen Steuerung 13 zugeleitet, die zur Steuerung der Drehmaschine 1 nach einem vorgegebenen Programm über Analogausgänge 14 mit einer Maschinenanpaßsteuerung 15 verbunden ist, deren Analogausgang 16 den Spindelkasten 2 zur Regelung der Drehzahl des Futters 3 und deren Analogausgang 17 den Vorschubmotor 10 zur Verschiebung des Längsschlittens 8 beaufschlagen.

- 4 -

Zur Positionierung des Werkzeugs 5 in der X-Richtung ist ein geschlossener Lageregelkreis gemäß Figur 2 vorgesehen, bei dem ein Lage-Soll/Istwert-Vergleicher 20 der numerischen Steuerung 13 mit seinem Analogausgang 14 an den ersten Eingang eines Motorreglers 21 in Form eines Soll/Istwert-Vergleichers für die Vorschubgeschwindigkeit angeschlossen ist, der mit seinem Analogausgang 17 den Vorschubmotor 10 beaufschlagt. Mit dem Vorschubmotor 10 sind einmal ein Tachogenerator 22, dessen Ausgang mit dem zweiten Eingang des Motorreglers 21 verbunden ist, und zum anderen über die Spindel 9 das Positionsmeßgerät 11 gekoppelt, dessen Ausgangssignale als Lage-Istwerte des Werkzeugs 5 über die Leitung 12 auf den ersten Eingang 20a des Lage-Soll/Istwert-Vergleichers 20 gelangen, dessem zweiten Eingang 20b der programmierte Lage-Sollwert zugeführt wird.

Zur Positionierung des Werkzeugs 5 in X-Richtung wird am Analogausgang 14 des Lage-Soll/Istwert-Vergleichers 20 der numerischen Steuerung 13 eine Spannung ausgegeben, die der Differenz zwischen dem programmierten Lage-Sollwert und dem jeweiligen Lage-Istwert proportional ist. Im allgemeinen treten jedoch am Analogausgang 14 des Lage-Soll/Istwert-Vergleichers 20 der numerischen Steuerung 13 und am Analogausgang 17 des Motorreglers 21 jeweils eine Offsetspannung auf, infolgedessen die tatsächlich angefahrene Position des Werkzeugs 5 (Lage-Istwert) sich von der programmierten Position (Lage-Sollwert) um eine Anzahl von Weginkrementen unterscheidet, die sich aus der Summe der beiden Offsetspannungen, dividiert durch die Spannung er-

- 5 -

rechnet, die vom Analogausgang 14 der numerischen Steuerung 13 pro Weginkrement ausgegeben wird.

Die Berechnung dieser Ablage zwischen Lage-Istwert und Lage-Sollwert sei an einem Zahlenbeispiel erläutert, wobei ein Inkrement 5 $\mu$m betragen möge:

Offsetspannung am Analogausgang 14
der numerischen Steuerung 13 = 5mV

Offsetspannung am Analogausgang 17
des Motorreglers 21 = 5mV

Spannung am Analogausgang 14
der Steuerung 13 pro Weginkrement = 2,5mV/5 $\mu$m

_____

Ablage des Lage-Istwerts vom
Lage-Sollwert = 4 Inkremente = 20 $\mu$m

Zur Vermeidung derartiger Ablagen mit den eingangs erwähnten nachteiligen Folgen wird am Analogausgang 14 der numerischen Steuerung 13 eine Spannung ausgegeben, die eine Funktion der Differenz zwischen Lage-Sollwert und Lage-Istwert und wenigstens einer gespeicherten Offsetstrecke ist.

Erfindungsgemäß werden die vom Lageregelkreis erzeugten Offsetstrecken über bestimmte Zeiträume vorab von der numerischen Steuerung 13 automatisch gemittelt und die resultierenden Mittelwerte im Speicher der numerischen Steuerung 13 vorzeichen- richtig akkumuliert. Beispielsweise werden die Offsetstrecken von der numerischen Steuerung 13 vor einem Bearbeitungsvorgang in einem bestimmten Zeitraum 256 mal addiert, durch 256 dividiert und anschließend der resultierende Mittelwert im Speicher der numerischen Steuerung 13 abgespeichert. Nachfolgend ermittelte resultierende Mittelwerte werden in diesem Speicher vorzeichenrichtig akkumuliert. Die akkumulierten Offsetstrecken werden einem dritten Eingang 20c des Lage-Soll/Istwert-Vergleichers 20 zugeführt, so daß sich die Ablage zwischen Lage-Istwert und Lage-Sollwert zu Null ergibt. Eine Änderung der akkumulierten Offsetstrecken erfolgt während des Stillstandes der Maschine (der Lageregelkreis hält eine erreichte Position).

In einer weiteren Ausbildung der Erfindung wird am Analogausgang 14 der numerischen Steuerung 13 eine Spannung ausgegeben, die eine Funktion der Differenz zwischen Lage-Sollwert und Lage-Istwert, eines an einem nicht dargestellten vierten Eingang des Lage-Soll/Istwert-Vergleichers 20 anliegenden vorgegebenen Geschwindigkeitswerts und wenigstens einer von der numerischen Steuerung 13 ermittelten und gespeicherten Offsetstrecke ist. Die Mittelung und Akkumulierung der vom Lageregelkreis erzeugten Offsetstrecken erfolgt in der oben angegebenen Weise. Eine Änderung der akkumulierten Offsetstrekken erfolgt während des Betriebes der Maschine.

- 7 -

Des weiteren erfolgt eine Änderung der akkumulierten Offsetstrecken nur dann, wenn die Ablage zwischen Lage-Sollwert und Lage-Istwert einen vorgegebenen Bereich überschreitet, vorzugsweise, wenn die Ablage größer als $\pm$ 1 Weginkrement ist.

- 8 -

Patentansprüche
================

1.) Verfahren zur automatischen Offsetspannungskompensation bei numerisch gesteuerten Bearbeitungsmaschinen oder Meßmaschinen, bei denen wenigstens ein geschlossener Lageregelkreis zur Positionierung eines Werkzeugs oder eines Werkstücks vorgesehen ist und am Analogausgang der numerischen Steuerung für den Geschwindigkeitssollwert für einen Motorregler eine Spannung ausgegeben wird, die bei der Positionierung eine Funktion der Differenz zwischen Lage-Sollwert und Lage-Istwert und wenigstens einer gespeicherten Offsetstrecke ist, dadurch gekennzeichnet, daß die vom Lageregelkreis erzeugten Offsetstrecken über bestimmte Zeiträume vorab von der numerischen Steuerung (13) automatisch gemittelt und die resultierenden Mittelwerte in einem Speicher der numerischen Steuerung (13) vorzeichenrichtig akkumuliert werden.

2.) Verfahren zur automatischen Offsetspannungskompensation bei numerisch gesteuerten Bearbeitungsmaschinen oder Meßmaschinen, bei denen wenigstens ein geschlossener Lageregelkreis zur Positionierung eines Werkzeugs oder eines Werkstücks vorgesehen ist und am Analogausgang der numerischen Steuerung für den Geschwindigkeitssollwert für einen Motorregler eine Spannung ausgegeben wird, die bei der Positionierung eine Funktion der Differenz zwischen Lage-Sollwert und Lage-Istwert ist, dadurch gekennzeichnet, daß am Analogausgang (14) der numerischen Steuerung (13) eine Spannung ausgegeben wird, die eine Funktion der Differenz zwischen Lage-Sollwert und Lage-Istwert, eines vorgegebenen Geschwindigkeitswerts und wenigstens einer von der numerischen Steuerung (13) automatisch ermittelten und gespeicherten Offsetstrecke ist.

3.) Verfahren nach Anspruch 1, dadurch gekennzeichnet, daß eine Änderung der akkumulierten Offsetstrecken nur dann erfolgt, wenn die Ablage zwischen Lage-Sollwert und Lage-Istwert einen vorgegebenen Bereich überschreitet.

4.) Verfahren nach Anspruch 3, dadurch gekennzeichnet, daß die Änderung der akkumulierten Offsetstrecken nur dann erfolgt, wenn die Ablage zwischen Lage-Sollwert und Lage-Istwert größer als $\pm$ 1 Weginkrement ist.

FIG.1

FIG. 2

Europäisches
Patentamt

**EUROPÄISCHER RECHERCHENBERICHT**

| | **EINSCHLÄGIGE DOKUMENTE** | | KLASSIFIKATION DER ANMELDUNG (Int Cl) |
|---|---|---|---|
| Kategorie | Kennzeichnung des Dokuments mit Angabe, soweit erforderlich, der maßgeblichen Teile | betrifft Anspruch | |
| X | US - A - 4 041 287 (GIDDINGS & LEWIS INC.)<br><br>* Spalte 1, Zeile 42 - Spalte 2, Zeile 14; Spalte 8, Zeile 32 - Spalte 11, Zeile 68; Spalte 18, Zeile 3 - Spalte 22, Zeile 68; Abbildungen 1,9 *<br><br>-- | 1-4 | G 05 B 19/35 |
| | GB - A - 2 045 461 (HALL AUTOMATION LTD.)<br><br>* Entirely *<br><br>--- | 1 | |

RECHERCHIERTE SACHGEBIETE (Int: Cl:)

G 05 B 19/35
19/33
19/37
19/23
19/25

KATEGORIE DER GENANNTEN DOKUMENTE

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt:

| Recherchenort | Abschlußdatum der Recherche | Prüfer |
|---|---|---|
| Den Haag | 02-07-1981 | CORNILLIE |

EPA form 1503.1 06.78